# EUROPEAN PATENT APPLICATION

(11) **EP 1 787 861 A1**
(43) Date of publication of application: **23.05.2007**
(21) Application number: 05025323.6
(22) Date of filing: 21.11.2005
(51) Int. Cl.: B60R 1/00, B60Q 1/48

(54) **Automobile rearview imaging system**

(71) Applicant: Lin, Kuen-Hsing, Chia I City (TW); Chen, Jung Ting, Tapei (TW)
(72) Inventor: Lin, Kuen-Hsing, Chia I City (TW); Chen, Jung Ting, Tapei (TW)
(74) Representative: Horak, Michael

(57) **Abstract**

An automobile rearview imaging system is provided herein, which mainly contains a number of image capturing devices (2) and display devices, all connected to a control circuit (4). The image capturing devices (2) are installed on the outside of an automobile at appropriate locations along the sides and on the roof. The display devices (3) are installed on the dashboard inside the automobile. The control circuit (4) performs real-time image capture from the image capturing devices, processes and delivers the captured images to the display devices (3) for presentation.

## Description

### BACKGROUND OF THE INVENTION

### (a) Technical Field of the Invention

The present invention generally relates to an automobile rearview imaging system, and more particularly to an automobile rearview imaging system using image capturing devices to capture images behind an automobile and presenting the captured images on display devices inside the automobile.

### (b) Description of the Prior Art

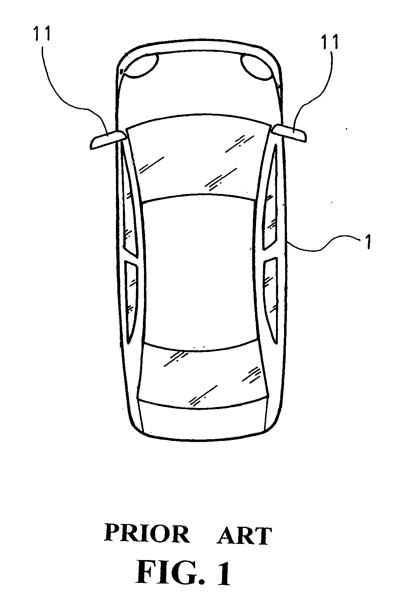

As shown in FIG 1, almost all of today's automobiles 1 have sideview mirrors 11 installed at the sides of the automobile body so that the driver is informed of events happening behind the automobile 1. These conventional sideview mirrors 11 have the following disadvantages.

A sideview mirror provides a viewing angle only around 12° and therefore introduces a number of blind spots, which is one of the main causes to automobile accidents. During the night or when it is raining, the function of the sideview mirrors is usually compromised by the glares from the headlights behind or the rain drops accumulated on the rearview mirrors. The protruding sideview mirrors are quite often and easily damaged, and they inevitably increase windage and produce annoying wind shear noise. When making turns or switching lanes, the driver has to shift his or her eyesight to the sides for a glance of the sideview mirrors, and is therefore unable to respond in time to unexpected events in the front. In addition, a passenger at the passenger seat could block the driver's view to the sideview mirror. When parking the automobile, the driver usually has to adjust the rearview mirrors as so to monitor places closer to the automobile body, but, when driving the automobile on the road, the driver has to restore the rearview mirrors to their normal positions. This back and forth changes are troublesome.

Accordingly, the conventional sideview mirrors, even though their inception is probably as old as the automobile itself, are not much improved over the years.

### SUMMARY OF THE INVENTION

The primary purpose of the present invention is to provide a rearview imaging system for an automobile to obviate the foregoing shortcomings of the conventional sideview mirrors.

The present invention mainly contains a number of image capturing devices, a same number of display devices, and a control circuit connecting all image capturing devices and display devices. The image capturing devices are installed on the outside of an automobile at appropriate locations along the two sides and on the roof. The display devices are installed on the dashboard inside the automobile. The control circuit performs real-time image capture from the image capturing devices, mirror the captured images (i.e., reversing the left and right of the image) to match the driver's viewpoint, and deliver the mirrored image to the display devices for presentation. The image capturing devices are usually CCD (charge coupled device)-based or CMOS (complementary metal oxide semiconductor)-based camera devices. The display devices are usually LCD (liquid crystal display)-based displays.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a top view showing an automobile with conventional sideview mirrors.
FIG 2 is a top view showing an automobile equipped with the rearview imaging system according to an embodiment of the present invention.
FIG 3 is a top view showing the connection between the various components of the rearview imaging system of FIG 2.
FIG 4 is a perspective view showing the installation of the display devices according an embodiment of the present invention.
FIGS. 5 and FIGS. 6 are top and side views show the viewing angles of the image capturing devices according to an embodiment of the present invention.
FIG 7 is a schematic view comparing a driver's head swing between an embodiment of the present invention and the conventional sideview mirrors.
FIG 8 is a schematic diagram showing the major functional blocks of the rearview imaging system of the present invention.
FIG 9 is a circuit diagram showing the details of an embodiment of the image capturing device.
FIG 10 is a schematic diagram showing the major functional blocks of the CMOS/CCD processor unit of the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

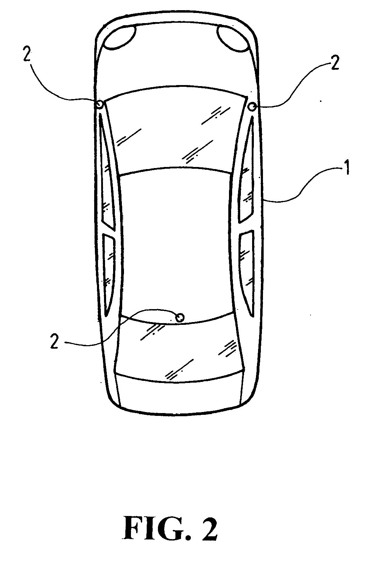

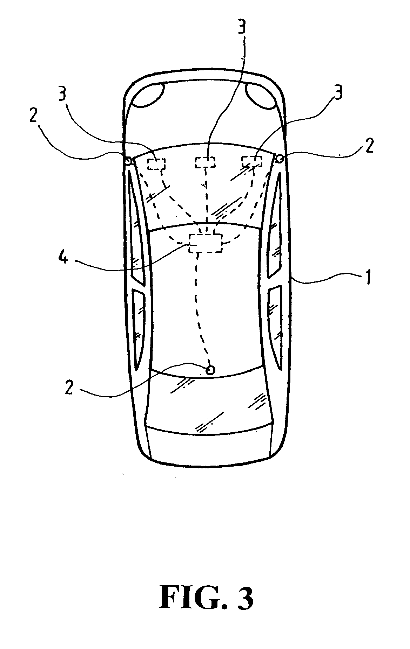

Please refer to FIGS. 2, 3, and 4. As illustrated, an embodiment of the present invention mainly contains a number of image capturing devices 2, the same number of display devices 3, and a control circuit 4. The image capturing devices 2 are usually CCD- or CMOS-based camera devices with water-proof and vibration-proof capabilities. The image capturing devices 2 are installed at appropriate locations along the left and right sides of an automobile 1 respectively. Two of the image capturing devices 2 could be installed at where conventional sideview mirrors are commonly located to replace the sideview mirrors. In some embodiments, the two image capturing devices 2 could be installed at other appropriate locations along the two sides of the automobile 1. Another image capturing device 2 could be installed on the roof and close to the rear windshield of the automobile 1. The image capturing devices 2 are all connected to the control circuit 4, which in turn is connected to the display devices 3.

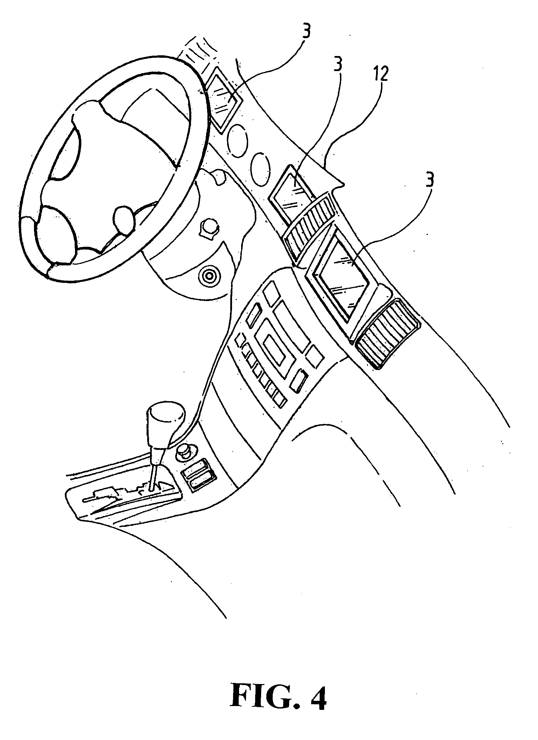

The display devices 3 are installed inside the automobile 1 and are, usually, on the dashboard. For the present embodiment, there are three display devices 3, two at the two sides of the driver for showing the images captured by the two image capturing devices 2 at the sides respectively, and the third one in the middle for showing the images captured by the image capturing device 2 on the roof, as shown in FIG 4. The display devices 3 are usually LCD-based devices.

The image capturing devices 2 is able to provide automatic white balancing and is able to work under a very low lux condition, so that they can provide clear images even under insufficient lighting during the night, and to reduce the glares and color spots from the headlights behind.

The most basic function of the control circuit 4 is to perform real-time image capture from the image capturing devices 2, mirror or reverse the left and right of the captured images to match the driver's viewpoint, and deliver the mirrored image to the display devices 3 for presentation. The control circuit 4 could also have more advanced functions such as infrared (IR)-based night vision, and noise filtering for the captured images.

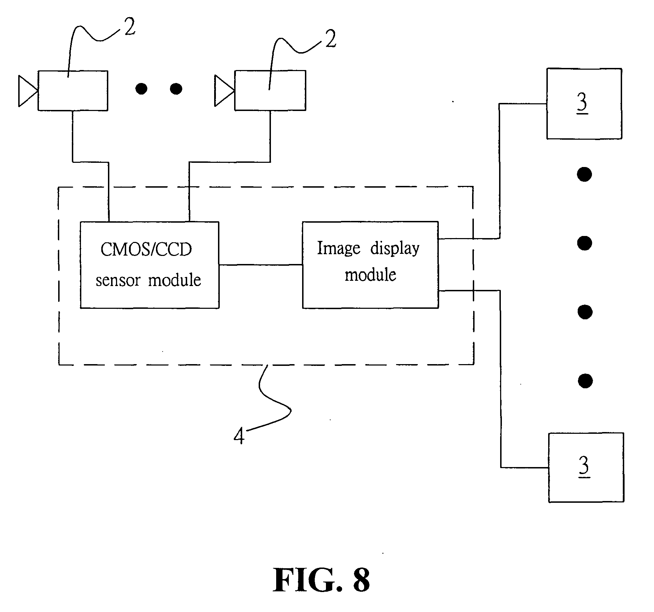

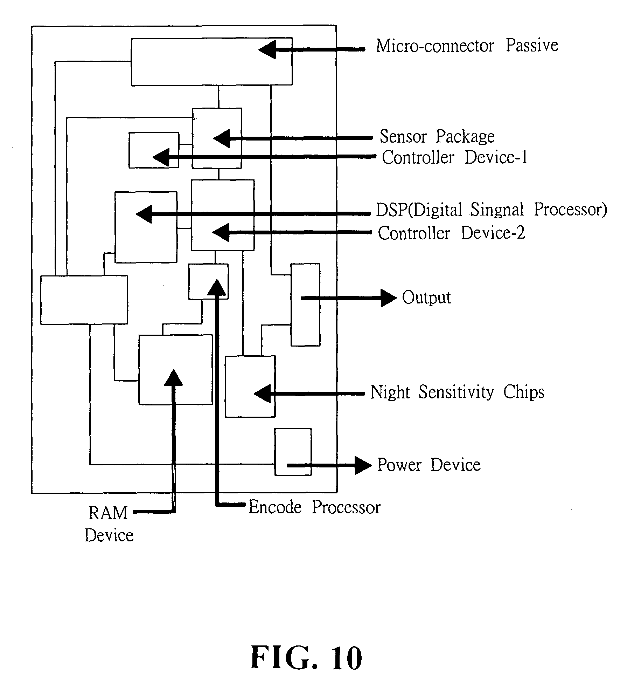

FIG 8 is a schematic diagram showing the major functional blocks of the rearview imaging system of the present invention. As illustrated, the control circuit 4 mainly contains a CMOS/CCD sensor module and an image display module. The images captured by the image capturing devices 2 (i.e., CMOS/CCD cameras) are fed to the CMOS/CCD sensor module for processing by a processor unit of the CMOS/CCD sensor module which is detailed in FIG 10. The processed signals are then output to the image display module for presentation on the display devices 3.

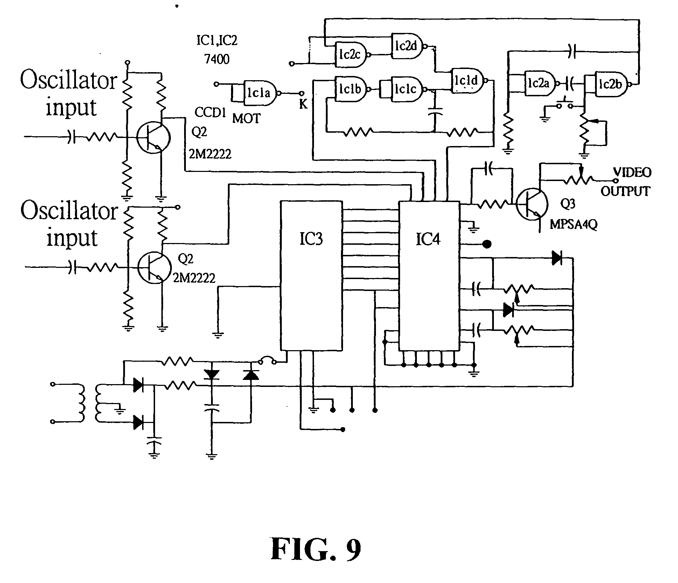

FIG 9 is a circuit diagram showing the details of an embodiment of the image capturing device. As shown, the images captured by the CMOS/CCD lens is input from the chip IC1a, recognized by the control chips IC3 and IC4, and then enlarged, framed, and output by the chips IC1 and IC2. The horizontal and vertical sync timing signals of the output signal are provided by the oscillation circuit comprising the transistors Q1 and Q2, which are driven by clock signals from built-in crystal oscillators (not shown in the diagram).

FIG 10 is a schematic diagram showing the major functional blocks of the CMOS/CCD processor unit of the present invention. As illustrated, the CMOS/CCD processor unit contains a micro-connector passive for connecting to the image capturing devices 2. There are also a number of controller chips, marked as "Sensor Package Controller Device-1" in the diagram, for controlling the zooming and focusing of the image capturing devices 2 and for sensing the motion of the image capturing devices 2. There are also a number of digital signal processing (DSP) chips, marked as "DSP Controller Device-2" in the diagram, performing the noise filtering and reduction for the captured images. A night sensitivity chip is also installed to instruct the DSP chips for image enhancement when there is not enough lighting in the environment. In addition, there are an encoder chip for video signal encoding, a RAM device for use by the encoder chip, and a power device for receiving a DC voltage (e.g., 12V) from the battery of the automobile and for driving the various components of the rearview imaging system. The output is then delivered to the image display module. The details of the image display module should be known to people of related art and therefore are omitted here.

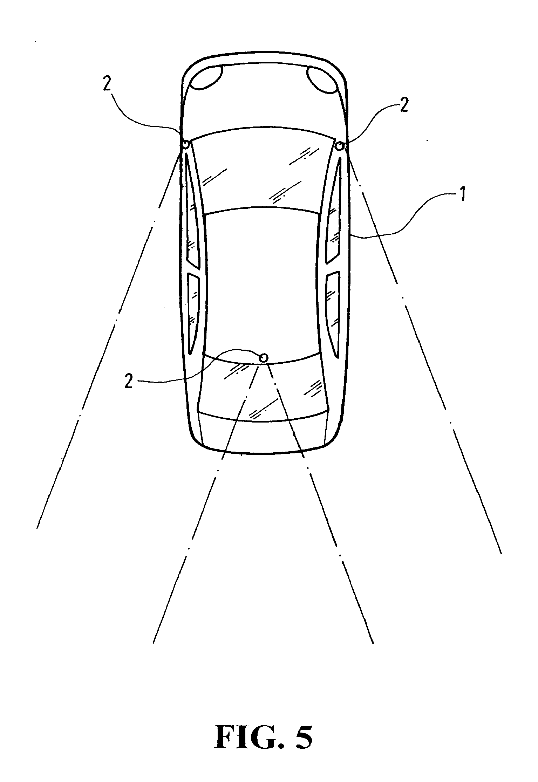

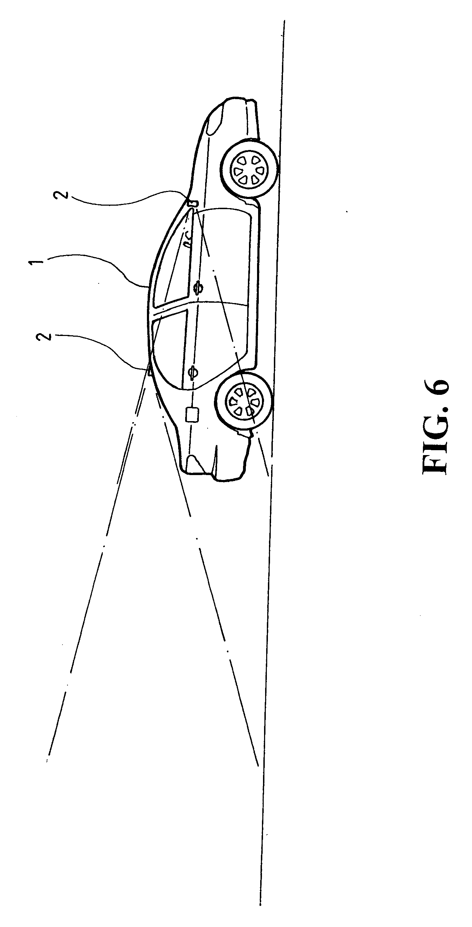

As shown in FIGS. 5 and 6, each of the image capturing devices 2 has a viewing angle between 65°~70° and the total viewing angle of the two image capturing devices 2 at the two sides of the automobile 1 is around 125°~150°, which is very close that of human eyes (150°~180°). As such, the driving safety is significantly enhanced especially when switching lanes and making turns as blind spots are reduced to the minimum with such an enlarged viewing angle.

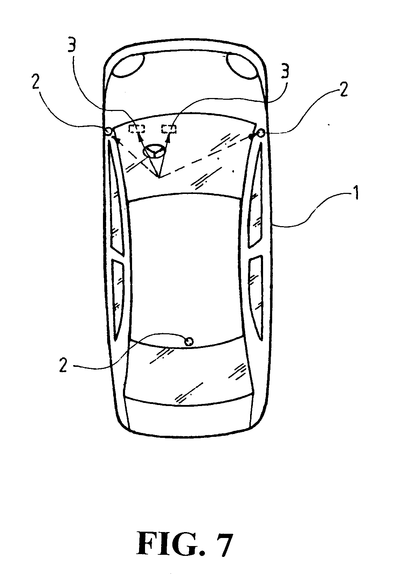

Presenting rearview images in the display devices 3 in front of the driver has an additional benefit that, when switching lanes and making turns, the driver can still fix his or her eyesight substantially in the front, as shown in FIG 7, instead of swinging his or her head to watch the sideview mirrors or to check out the blind spots. The driver also doesn't need to concern that passengers in the automobile would block his or her view to the sideview mirrors.

Replacing the conventional sideview mirrors with the image capturing devices 2 has quite a few other advantages. For example, the protruding sideview mirrors are often and easily damaged, but this is quite unlikely for the very small-sized image capturing devices 2. With the enlarged viewing angle of the image capturing devices 2, the driver is also relieved from the required adjustment to sideview mirrors during parking or other scenarios. Additionally, the small form factor of the image capturing devices 2 contributes significantly less windage and wind shear noise. The accumulated rain drops or ices on the sideview mirrors during rainy or snowy days are avoided and therefore are no longer hazards to the driving safety.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A rearview imaging system for an automobile, comprising:
a plurality of image capturing devices on the outside of said automobile at appropriate locations along the two sides and on the roof of said automobile;
a same number of display devices installed inside said automobile in front of the driver seat of said automobile; and
a control circuit which connects to both said image capturing devices and said display devices;
wherein the rearview images captured by said image capturing devices are processed by said control circuit and then displayed via said control circuit in corresponding display devices respectively.

2. The rearview imaging system according to claim 1, wherein each of said image capturing devices is one of a CCD-based camera device and a CMOS-based camera device.

3. The rearview imaging system according to claim 1, wherein each of said image capturing devices is capable of automatic white balancing and working under a substantially low lux condition.

4. The rearview imaging system according to claim 1, wherein said control circuit is capable of real-time image capture and delivery, IR-based night vision, and noise filtering.

5. The rearview imaging system according to claim 1, wherein the images captured by said image capturing devices are mirrored by said control circuit before being displayed on said display devices.

6. The rearview imaging system according to claim 1, wherein each of said image capturing devices is water-proof and vibration-proof.
